# EUROPÄISCHE PATENTSCHRIFT

(11) **EP 0 930 248 B1**
(45) Veröffentlichungstag und Bekanntmachung des Hinweises auf die Patenterteilung: **03.07.2002**
(21) Anmeldenummer: 98124857.8
(22) Anmeldetag: 31.12.1998
(51) Int. Cl.: B65G 17/34

(54) **Vorrichtung zum Sortieren von Stückgütern**
Device for sorting articles
Dispositif de tri d'articles

(30) Priorität: 17.01.1998 DE 19801706
(43) Veröffentlichungstag der Anmeldung: 21.07.1999
(73) Patentinhaber: AXMANN-FÖRDERTECHNIK GMBH, D-74889 Sinsheim (DE)
(72) Erfinder: Axmann, Norbert, 74889 Sinsheim-Ho (DE)
(74) Vertreter: Geitz, Holger

(56) Entgegenhaltungen:
- EP-A- 0 306 144
- FR-A- 1 313 243
- US-A- 3 231 068
- US-A- 3 912 071

## Beschreibung

Die Erfindung bezieht sich auf eine Vorrichtung zum Sortieren von Stückgütern, bei der längs einer Sortierstrecke aufeinanderfolgend Abwurfstationen angeordnet sind und eine Fördereinrichtung geführt und angetrieben sowie mit aufeinanderfolgenden Sortiereinrichtungen ausgerüstet ist, und bei der jede Sortiereinrichtung ein quer zur Sortierstrecke antreibbares Gurtband für die Aufnahme jeweils eines in einer Aufgabestation aufgebbaren Stückgutes und für dessen gezielten Abwurf in einer Abwurfstation besitzt.

Vorrichtungen zum Sortieren von Stückgütern mit einer längs einer Sortierstrecke geführten Fördereinrichtung und dieser in Förderrichtung aufeinanderfolgend zugeordneten Sortiereinrichtungen sind bereits allgemein bekannt.

So ist in einer Firmendruckschrift der US-Firma SANDVIK Sorting Systems, Inc. bereits eine Sortiereinrichtung dieser Art und Zweckbestimmung beschrieben, bei der längs einer Sortierstrecke aufeinanderfolgend Abwurfstationen mit seitlichen Abwurfrutschen angeordnet sind und eine längs der Sortierstrecke bewegbare Fördereinrichtung mit in Förderrichtung aufeinanderfolgenden Sortiereinrichtungen ausgerüstet ist. Jede Sortiereinrichtung besitzt ein quer zur Sortierstrecke antreibbares Gurtband für die Aufnahme jeweils eines Stückgutes und dessen gezielten Abwurf in einer Abwurfstation. Jede Sortiereinrichtung ist mit einem drehrichtungsumsteuerbaren Elektromotor zum Antreiben des Gurtbandes der betreffenden Sortiereinrichtung ausgerüstet. Die Energieversorgung der Elektromotoren der Sortiereinrichtungen erfolgt über Schleifkontakte.

Bei einer derartigen Sortiereinrichtung werden die Stückgüter in einer Aufgabestation auf die Gurtbänder der Sortiereinrichtungen aufgegeben, und zwar jeweils ein Stückgut auf eine Sortiereinrichtung. Die Stückgüter sind mit einer Codierung versehen, die vor oder bei der Aufgabe auf eine Sortiereinrichtung erfaßt wird. In Abhängigkeit von der Codierung wird der Antriebsmotor des Gurtbandes derjenigen Sortiereinrichtung, die das Stückgut aufnimmt, in einer bestimmten Abwurfstation rechts- oder linksdrehend angesteuert mit der Folge, daß ein gezielter Abwurf des Stückgutes in einer bestimmten Abwurfstation erfolgt.

Die vorbekannte Sortiereinrichtung hat sich bewährt, erscheint aber im Hinblick auf ihren kostenaufwendigen Aufbau mit jeweils einem über Schleifkontakte mit elektrischer Energie zu versorgenden Antriebsmotor noch verbesserungsbedürftig.

Eine Vorrichtung gemäß dem Oberbegriff des Patentanspruches 1 ist aus der EP 0 306 144 A sowie aus der US 3 912 071 A bekannt. Bei diesen Vorrichtungen erfolgt der Antrieb des Gurtbandes über eine innenseitig bzw. außenseitig an der unteren Föderbandtrumlage angreifende Reibrolle, wobei das Förderband einerseits im Bereich der Reibrolle eine dem Auβenradius der Reibrolle entsprechende Umlenkung erfährt und andererseits über zwei beiderseits der Reibrolle in Förderrichtung des Gurtbandes beabstandete Umlenkrollen eine entgegengesetzte Umlenkung erfährt. Diese Anordnung erfordert eine nicht unerhebliche Spannung des Gurtbandes in seiner Förderrichtung, ohne die das Gurtband durchrutschen oder gar nicht angetrieben würde. Diese Spannung führt jedoch dazu, daß insbesondere bei kurzen Sortiereinrichtungen erhebliche Aufwendungen erforderlich sind, um einen Gurtgeradelauf zu ermöglichen. Hierzu müssen ballige oder zumindest trapezförmig abgedrehte Umlenkrollen eingesetzt werden und jede einzelne Sortiereinrichtung muß sorgfältig eingestellt werden. Bedingt durch die Mehrfachumlenkung der unter Spannung stehenden Gurtbänder der jeweiligen Sortiereinrichtungen tritt ein vorzeitiger Verschleiß derselben mit der Folge von dementsprechend häufigen Stillstandszeiten der gesamten Sortiervorrichtung auf.

Bei einer Sortiereinrichtung gemäß der US 3 231 068 A erfolgt der Antrieb der Gurtbänder direkt über einen Elektromotor, der unmittelbar über ein Winkelgetriebe mit der als Antriebsrolle dienenden Umlenkrolle des Gurtbandes der Sortiereinrichtung in Eingriff steht. Alternativ erfolgt der Antrieb der Gurtbänder über ein mit einer Riemenscheibe und einem Keilriemen ausgestatteten Winkelgetriebe, das zwischen dem Obergurt und dem Untergurt des Gurtbandes angeordnet ist und das drehfest mit einer vom Gurtband nach unten wegweisenden Antriebswelle verbunden ist, auf der ein wahlweise mit seitlichen Zahnstangen in Eingriff bringbares Zahnrad drehfest angeordnet ist, und wobei der Keilriemen mit einer weiteren Riemenscheibe in Eingriff steht, die drehfest mit der als Antriebsrolle dienenden Umlenkrolle verbunden ist. Dieser Antrieb ist aufwendig und erfordert ebenfalls eine nicht unerhebliche Vorspannung des Gurtbandes in seiner Förderrichtung.

Eine ähnliche Sortiervorrichtung ist in der FR 1 313 243 A beschrieben, wobei der Antrieb des Gurtbandes über ein wahlweise über einen Zahnradeingriff schaltbares Winkelgetriebe erfolgt, das an den in Richtung der Sortierstrecke weisenden Stirnseiten der Sortiereinrichtungen angeordnet ist und das in direktem Eingriff mit einer als Antriebsrolle gestalteten Umlenkrolle steht. Auch dieser Antrieb ist aufwendig und erfordert eine entsprechend hohe Gurtspannung mit der Folge der vorstehend beschriebenen Nachteile.

Auch aus der JP 08 324 776 A ist bereits eine gemäß den vorstehenden gattungsgemäßen Merkmalen ausgebildete Vorrichtung zum Sortieren von Stückgütern vorbekannt, die eine längs einer Sortierstrecke geführte Fördereinrichtung mit aufeinanderfolgenden Sortiereinrichtungen zum aufnehmen und abwerfen von Stückgütern in vorbestimmten Abwurfstationen besitzt. Diese Sortiereinrichtungen sind mit quer zur Längserstreckung der Sortierstrecke antreibbaren Umlauf-Fördermitteln ausgerüstet, bei denen es sich um Rund- oder Keilriemen handelt, die jeweils über zwei um horizontale Achsen umlaufende Umlenkrollen sowie über zwei weitere Umlenkrollen mit vertikalen Umlaufachsen geführt sind. Jeweils eine der um vertikale Achsen geführten Umlenkrollen steht mit einem Reibrad in Verbindung, das beim Durchlaufen einer Sortiereinrichtung durch eine Abwurfstation mit quer zur Längserstreckung der Sortierstrecke bewegbaren Reibschienen wahlweise in reibungsschlüssige Wirkverbindung bringbar ist. Diese vorbekannte Sortiervorrichtung ist im Aufbau äußerst aufwendig, weil für jeden quer zur Längserstreckung der Sortierstrecke antreibbaren Riemen einer Sortiereinrichtung ein eigener Reibradantrieb vorhanden sein muß. Demgemäß müssen die quer zur Sortierstrecke antreibbaren Riemen einer Sortiereinrichtung in einem gewissen Abstand voneinander angeordnet sein mit der Folge, daß mit dieser Sortiervorrichtung nur Stückgüter vereinzel- und sortierbar sind, deren Abmessungen in jeder Erstreckung den Abstand benachbarter Riemen einer Sortiereinrichtung übersteigen. Kleinere Stückgüter hingegen können zwischen benachbarten Riemen der jeweiligen Sortiereinrichtung eingeklemmt werden, was logischerweise eine Störung des Sortierbetriebs zur Folge hat.

Im übrigen sind zwar bei Gurtförderern Förderbandantriebe bekannt, die eine am Untergurt des Förderbandes angreifende Reibrolle aufweisen, wobei zwischen den Förderbandtrumlagen im Angriffsbereich der Reibrolle eine Gegendruckrolle angeordnet ist. Bei diesen Gurtförderern handelt es sich jedoch nicht um Sortiervorrichtungen und die Qualität der Bänder sowie die Antriebsverhältnisse sind mit denen bei Sortiereinrichtungen nicht vergleichbar. Denn dabei steht das Förderband ebenfalls unter einer in Förderrichtung nicht unerheblichen Spannung und zwar entweder aufgrund einer mehrfachen Umlenkung desselben und/oder weil die Gegendruckrollen als Tragrollen für den Obergurt des Förderbandes ausgebildet sind, so daß das Förderband nicht lose bzw. spannungsarm führbar ist.

Durch die Erfindung soll daher eine gegenüber dem Stande der Technik verbesserte Vorrichtung zum Sortieren von Stückgütern geschaffen werden, die einen einfachen und kostengünstigen Aufbau aufweist und sich durch einen störungsunanfälligen Betrieb auszeichnet.

Gelöst ist diese Aufgabe gemäß einer ersten Erfindungsgruppe dadurch, daß bei der Vorrichtung nach dem Oberbegriff des Patentanspruchs 1 der Antrieb des Gurtbandes der jeweiligen Sortiereinrichtung über wenigstens eine am Untergurt des Gurtbandes im Angriffsbereich einer dieses innenseitig abstützenden Gegendruckrolle angreifenden Reibrolle erfolgt.

Anstelle reibungsschlüssig zusammenwirkender Antriebsmittel können im Rahmen der Erfindung auch formschlüssig zusammenwirkende. Antriebsmittel vorgesehen sein, nämlich Zahnritzel als zweite Antriebsmittel der Sortiereinrichtungen und als erste Antriebsmittel Zahnstangen, die den Abwurfstationen zugeordnet und mit den Zahnritzeln der Sortiereinrichtungen zur formschlüssigen Zusammenwirkung bringbar sind, wenn eine Sortiereinrichtung eine Abwurfstation durchläuft. Der Einsatz formschlüssig zusammenwirkender Antriebsmittel hat sich bei solchen Sortiervorrichtungen als besonders sinnvoll erwiesen, die mit geringen Geschwindigkeiten arbeiten, aber zum Sortieren schwergewichtiger Stückgüter bestimmt sind.

Dementsprechend ist die vorstehende Aufgabe gemäß einer zweiten Erfindungsgruppe dadurch gelöst, daß bei der aus der US 3 912 071 A bekannten Vorrichtung nach dem Oberbegriff des Patentanspruchs 4 der Antrieb des Gurtbandes der jeweiligen Sortiereinrichtung über wenigstens eine am Untergurt des Gurtbandes im Angriffsbereich einer dieses innenseitig abstützenden Gegendruckrolle angreifenden Reibrolle erfolgt.

Bei der Erfindung handelt es sich somit darum, anstelle der vorgenannten Antriebe der quer zur Sortierstrecke antreibbaren Gurtbänder der Sortiereinrichtungen, einen Antrieb jedes der Gurtbänder zu schaffen, bei der mittels des Winkelgetriebes die von den Reibleisten oder Zahnstangen abgeleitete Antriebsbewegung rechtwinklig umgesetzt und dann über wenigstens eine am Untergurt jedes Gurtbandes angreifende Reibrolle auf diesen übertragen wird, wobei im Angriffsbereich dieser Reibrolle eine Abstützung des Untergurtes mittels einer Gegendruckrolle erfolgt. Dadurch kann das Gurtband lose bzw. in seiner Förderrichtung spannungsarm über zwei Umlenkrollen gelegt werden, während das Gurtband über die wenigstens eine Reibrolle abgestützt durch die gegenüberliegende Gegendruckrolle einfach und effektiv angetrieben werden kann. Dies ermöglicht einen unaufwendigen Gurtgeradelauf sowie eine lange Lebensdauer der Gurtbänder und folglich einen über lange Zeit störungs- und unterbrechungsfreien Betrieb der gesamten Sortiervorrichtung.

Im Gegensatz zu den in den jeweiligen Abwurfstationen ansteuerbaren Antriebsmotoren für die Gurtbänder der Sortiereinrichtungen bei der Vorrichtung nach der Firmendruckschrift der US-Firma SANDVIK Sorting Systems, Inc. erfolgt bei der Erfindung der wahlweise Antrieb der Gurtbänder der Sortiereinrichtungen durch rein mechanische Antriebsmittel, die in der jeweiligen Abwurfstation, in der das auf der Sortiereinrichtung aufgenommene Stückgut abgeworfen werden soll, das Gurtband quer zur Sortierstrecke antreiben, jedoch in allen anderen Abwurfstationen, die von der Sortiereinrichtung ohne Stückgutabwurf durchlaufen werden sollen, wirkungslos bleiben.

Obgleich wahlweise zur Zusammenwirkung bringbare Antriebsmittel unterschiedlichster Ausgestaltung denkbar sind, hat sich der Einsatz reibungsschlüssig zusammenwirkender Antriebsmittel als besonders zweckmäßig erwiesen.

Gemäß einer Weiterbildung der ersten Erfindungsgruppe können aber auch die Sortiereinrichtungen jeweils mit einem konisch ausgebildeten Reibrad als zweites Antriebsmittel ausgerüstet sein und die mit diesen Reibrädern beim Durchlaufen einer Abwurfstation zur Zusammenwirkung bringbaren Reibleisten sind zweckmäßigerweise - in Durchlaufrichtung der Sortiereinrichtungen gesehen - derart bogenförmig ausgebildet, daß beim Einlaufen einer Sortiereinrichtung in eine Abwurfstation eine mit dem Reibrad der betreffenden Sortiereinrichtung zur Zusammenwirkung gebrachte Reibleiste zunächst im Bereich eines kleinen Reibraddurchmessers und dann fortschreitend an größer werdenden Reibraddurchmessern angreift.

Bei einer derartigen Ausbildung der Reibleisten und der Reibräder der Sortiereinrichtungen werden diese beim Einlaufen in eine Abwurfstation zunächst mit geringer und beim Durchlauf der Sortiereinrichtung durch die Abwurfstation mit sich steigernder Drehgeschwindigkeit angetrieben.

Im Rahmen der Erfindung kann jede Sortiereinrichtung aber auch mit wenigstens zwei drehfest miteinander verbundenen Reibrädern unterschiedlicher Durchmesser ausgerüstet sein und als erste Antriebsmittel dienen dann in den Abwurfstationen jeweils zwei derart abgestuft zueinander ausgebildete Reibleistenabschnitte, daß beim Einlaufen einer Sortiereinrichtung in eine Abwurfstation zunächst das Reibrad mit kleinem Durchmesser mit einem Reibleistenabschnitt und danach das größeren Durchmesser aufweisende Reibrad mit dem anderen Reibleistenabschnitt zur Zusammenwirkung bringbar ist.

Auch bei dieser Ausführungsform wird das Gurtband einer Sortiereinrichtung, wenn diese eine Abwurfstation passiert, deren Reibleisten in ihre Antriebsstellung verschwenkt worden sind, zunächst mit geringerer und anschließend mit größerer Geschwindigkeit angetrieben.

Bei der Sortiervorrichtung gemäß der ersten oder der zweiten Erfindungsgruppe hat es sich als zweckmäßig erwiesen, wenn die den Abwurfstationen zugeordneten Reibleisten oder Zahnstangen quer zur Längserstreckung der Sortierstrecke jeweils zwischen einer beim Passieren einer Sortiereinrichtung mit deren Reibrad reibungsschlüssig bzw. Zahnritzel formschlüssig zusammenwirkenden Antriebsstellung und einer abseitigen Ausrücklage betätigbar sind.

Bei dieser Weiterbildung sind die mit den Reibleisten bzw. Zahnstangen wahlweise zur Zusammenwirkung bringbaren Reibräder bzw. Zahnritzel den Sortiereinrichtungen fest zugeordnet und die Reibleisten bzw. Zahnstangen werden, wenn das auf der jeweiligen Sortiereinrichtung aufgenommene Stückgut in der betreffenden Abwurfstation abgeworfen werden soll, so in den Weg des Reibrades bzw. des Zahnritzels dieser Sortiereinrichtung betätigt, daß über die Länge der Reibleiste bzw. Zahnstange beim Durchlaufen der betreffenden Abwurfstation ein Antrieb des Reibrades bzw. Zahnritzels erfolgt.

Ebenfalls gemäß einer Weiterbildung sind die Reibleisten bzw. Zahnstangen an um vorrichtungsfeste Anlenkpunkte verschwenkbaren Lenkern angeordnet und mittels dieser Lenker zwischen ihren Antriebsstellungen und Ausrücklagen betätigbar.

Bei den Lenkern, an denen die Reibleisten bzw. Zahnstangen angeordnet sind, kann es sich vorzugsweise um Doppellenker mit jeweils einem nach der von der Reibleiste bzw. Zahnstange abgewandten Seite von der jeweiligen Anlenkachse vorstehenden Hebelarm handeln und an den vorstehenden Hebelarmen greifen dann Mittel zum Betätigen der Reibleisten bzw. Zahnstangen zwischen ihren Antriebsstellungen und ihren von der Bahn der Reibräder bzw. Zahnritzel der Sortiereinrichtungen abseitigen Ausrücklagen an.

Eine andere wichtige Weiterbildung der erfindungsgemäßen Vorrichtungen sieht vor, daß jeder Abwurfstation paarweise zwei quer zur Förderrichtung voneinander beabstandete Reibleisten oder Zahnstangen zugeordnet sind, die wahlweise rechts- oder linksseitg an einem Reibrad bzw. einem Zahnritzel einer die Abwurfstation passierenden Sortiereinrichtung angreifen mit deren Reibrad bzw. Zahnritzel zur Zusammenwirkung bringbar sind.

Angesichts der Anordnung wahlweise auf der rechten oder linken Seite an einem Reibrad angreifender Reibleisten bzw. an einem Zahnritzel angreifender Zahnstangen in einer Abwurfstation ist ein wahlweiser Antrieb der Gurtbänder der Sortiereinrichtungen in der einen oder anderen Laufrichtung möglich mit der Folge, daß wahlweise in der betreffenden Abwurfstation ein auf dem Gurtband einer Sortiereinrichtung aufgenommenes Stückgut rechts- oder linksseitig abgeworfen wird.

Die Betätigung der Reibleisten bzw. der Zahnstangen aus ihren jeweiligen Ausrücklagen in ihre Antriebsstellungen kann zweckmäßigerweise elektromagnetisch oder auch pneumatisch erfolgen, und zwar vorzugsweise gegen die Wirkung rückstellender Federkräfte, die eine Betätigung der Reibleisten bzw. der Zahnstangen in ihre jeweiligen Ausrücklagen vermitteln. Als Betätigungsmittel können aber auch doppelt wirkende Arbeitszylinder dienen.

In gleichfalls weiterer Ausgestaltung hat es sich als sinnvoll erwiesen, wenn die Fördereinrichtung, an der die Sortiereinrichtungen in Förderrichtung aufeinanderfolgend angekoppelt sind, einen Umschlingungstrieb umfaßt. Zweckmäßigerweise ist der Umschlingungstrieb über in Vertikalebenen umlaufende Umlenkrollen geführt. Bei dem Umschlingungstrieb der Fördereinrichtung kann es sich insbesondere um einen Keilriemen handeln.

Schließlich weist die Vorrichtung wenigstens eine Zuführeinrichtung zum Aufgeben von Stückgütern auf die Sortiereinrichtungen am Anfang der Sortierstrecke im Bereich einer Aufgabestation auf. Zweckmäßigerweise mündet die Zuführeinrichtung unter Einschluß eines spitzen Winkels gegenüber der Födereinrichtung in die Sortierstrecke ein.

Anhand der beigefügten Zeichnungen soll nachstehend eine Ausführungsform der Erfindung erläutert werden. In schematischen Ansichten zeigen:

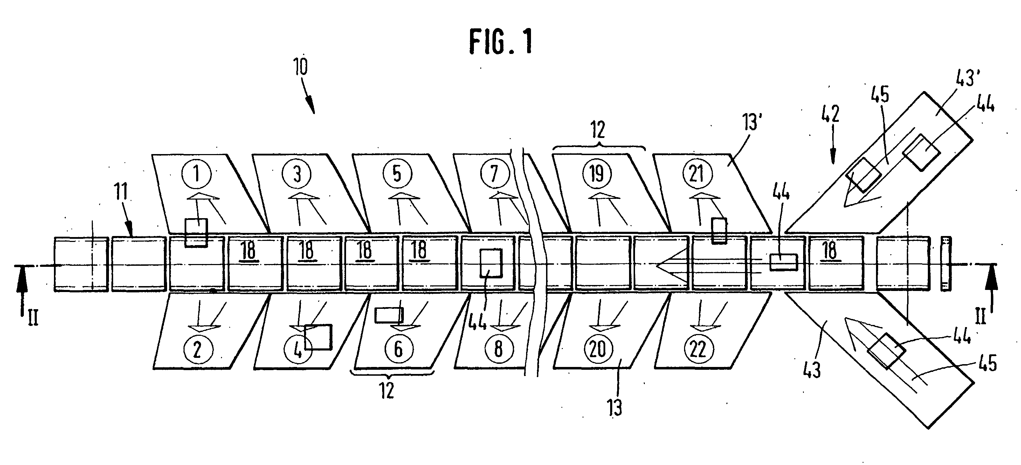

- Fig. 1: eine Draufsicht auf eine Vorrichtung zum sortieren von Stückgütern, bei der längs einer Sortierstrecke jeweils aufeinanderfolgend Abwurfstationen und beidseitig Abwurfrutschen angeordnet sind.
- Fig. 2: ein der Schnittlinie II-II in Fig. 1 entsprechenden Längsschnitt durch die Vorrichtung mit längs der Sortierstrecke geführten Sortiereinrichtungen, die ebenfalls aufeinanderfolgend angeordnet sind,
- Fig. 3: einen der Schnittlinie III-III in Fig. 2 entsprechenden Querschnitt durch die Vorrichtung,
- Fig. 4: in einem vergrößerten Ausschnitt aus Fig. 3 eine längs der Sortierstrecke geführte Sortiereinrichtung mit einem quer zur Längserstreckung der Sortierstrecke antreibbaren Gurtband und den Mitteln zum wahlweisen Antreiben dieses Gurtbandes,

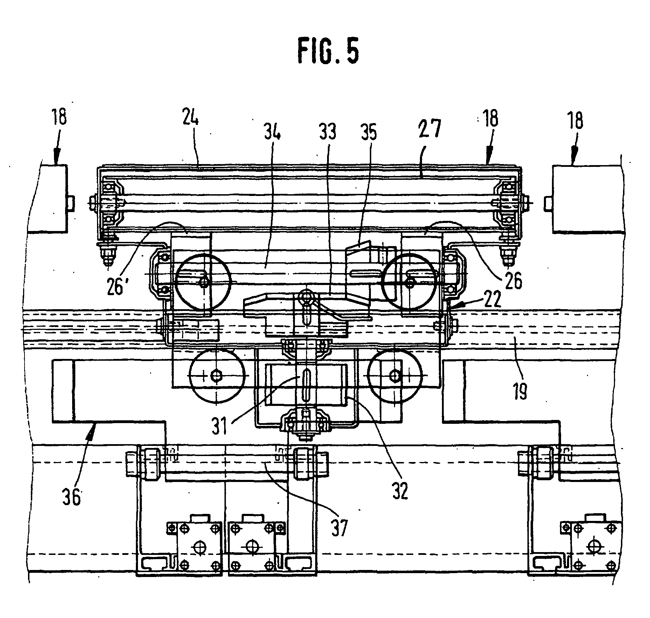

- Fig. 5: einen der Schnittlinie V-V in Fig. 4 entsprechenden Längsschnitt durch die Sortiereinrichtung,
- Fig. 6: eine Antriebswelle eines Winkelgetriebes einer Sortiereinrichtung mit einem konischen Reibrad und eine bogenförmig ausgebildete Reibleiste für sich allein in einer Ansicht wie in Fig. 5,
- Fig. 7: in einer Ansicht wie in Fig. 6 eine Antriebswelle eines Winkelgetriebes einer Sortiereinrichtung mit zwei unterschiedliche Durchmesser aufweisenden Reibrädern und einer daran angepaßten Reibleiste mit zwei zueinander versetzten Reibleistenabschnitten und
- Fig. 8: eine alternative Ausführungsform mit einem Zahnritzel anstelle eines Reibrades mit einer Zahnstange anstelle einer Reibleiste in einer Ansicht von oben.

Die in der Zeichnung veranschaulichte Vorrichtung 10 zum Sortieren von Stückgütern besitzt eine langgestreckte Sortierstrecke 11, längs der aufeinanderfolgend Abwurfstationen 12 mit seitlichen Abwurfrutschen 13, 13' angeordnet sind. Die Vorrichtung 10 umfaßt ferner eine Fördereinrichtung 14 mit einem über vorrichtungsfeste Umlenkrollen 15, 15' geführten Keilriemen 16 als Endlosfördermittel, an den aufeinanderfolgend Sortiereinrichtungen 18 angekoppelt sind.

Geführt werden die Sortiereinrichtungen 18 mittels beidseitig an diesen angeordneter Führungsrollen, die mit beabstandet.voneinander verlaufenden, vorrichtungsfesten Führungsschienen 19, 19' zusammenwirken. Die Sortiereinrichtungen 18 sind auf beiden Seiten mit zwei in Förderrichtung im Abstand voneinander angeordneten Sätzen aus je drei Führungsrollenpaaren 20, 20' ausgerüstet. Jeweils zwei Führungsrollenpaare nehmen eine Führungsschiene 19, 19' zwischen sich auf und das dritte Führungsrollenpaar eines Führungsrollensatzes greift innenseitig an den vorrichtungsfesten Führungsschienen 19, 19' an. Dadurch ist eine präzise Längsführung der Sortiereinrichtungen 18 gewährleistet.

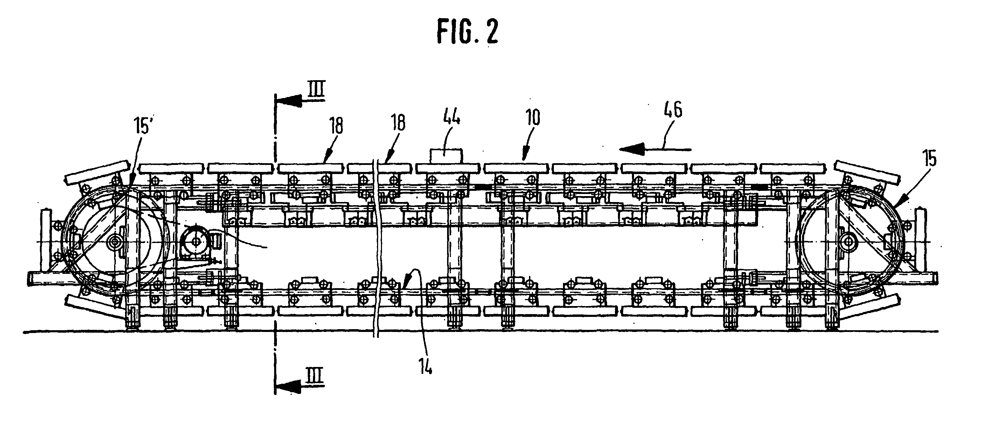

Die den als Endlosfördermittel dienenden Keilriemen 16 führenden Umlenkrollen 15, 15' laufen in einer Vertikalebene um mit der Folge, daß die an den Keilriemen 16 angekoppelten Sortiereinrichtungen 18 jeweils unter der Sortierstrecke zurückgeführt werden. Der Führung des Keilriemens 16 entsprechend ist die Vorrichtung 10 mit oberen und unteren Führungsschienen 19, 19' zum Führen der Sortiereinrichtungen 18 ausgerüstet und im Bereich der Umlenkrollen 15, 15' sind die beidseitig der Sortierstrecke verlaufenden Führungsschienen 19, 19' jeweils über Bogenstücke miteinander verbunden. Angetrieben wird der Keilriemen 16 der Fördereinrichtung 14 mittels eines über einen weiteren Riementrieb mit einer der Umlenkrollen verbundenen Elektromotor 21, was in Fig. 2 nur angedeutet ist.

Die seitlichen Führungsrollensätze 20, 20' jeder Sortiereinrichtung 18 sind jeweils beidseitig an einem Fahrwagen 22 gelagert, auf dem ein quer zur Längsrichtung der Sortierstrecke 11 antreibbares Gurtband 24 aufgenommen ist. Die Gurtbänder 24 der Sortiereinrichtungen 18 sind jeweils über Umlenkrollen 25, 25' mit sich in Laufrichtung des Keilriemens 16 erstreckenden Drehachsen geführt und der Antrieb der Gurtbänder 24 erfolgt über zwei in Förderrichtung der Sortiereinrichtungen 18 voneinander beabstandete und um in der genannten Förderrichtung verlaufende Drehachsen umlaufende Reibrollen 26, 26', die am Untergurt des jeweiligen Gurtbandes 24 im Bereich einer dieses innenseitig abstützenden Gegendruckrolle 27 angreifen.

Angetrieben werden die Reibrollen 26, 26' jeweils mittels eines Kegelradgetriebes 30, das eine nach der vom Gurtband 24 der jeweiligen Sortiereinrichtung 18 wegweisenden Seite vorstehende Antriebswelle 31 aufweist, auf der ein weiteres Reibrad 32 drehfest aufgenommen ist. Das Kegelradgetriebe 30 ist in dem jeweiligen Fahrwagen 22 der Sortiereinrichtung 18 aufgenommen und umfaßt ein auf der genannten Antriebswelle 31 sitzendes Kegelrad 33, das mit einem auf der die beiden am Untergurt des jeweiligen Gurtbandes 24 angreifenden Reibrollen 26, 26' aufnehmenden Welle 34 drehfest angeordneten Kegelritzel 35 zusammenwirkt.

Jeder Abwurfstation 12 der Sortierstrecke 11 sind zwei wahlweise mit dem auf der Antriebswelle 31 des Kegelradgetriebes 30 aufgenommenen Reibrad 32 zur reibungsschlüssigen Zusammenwirkung bringbare Reibleisten 36, 36' zugeordnet, die in Längsrichtung der Sortierstrecke 11 verlaufen. Angeordnet sind die Reibleisten 36, 36' jeweils an um vorrichtungsfeste Anlenkachsen 37, 37' verschwenkbaren Doppellenkern 38, 38' derart, daß jeweils die eine Reibleiste 36 auf einer Seite und die andere Reibleiste 36' wahlweise auf der anderen Seite zur Anlage an das genannte Reibrad 32 gebracht werden können. Die die Reibleisten 36, 36' tragenden Doppellenker 38, 38' weisen nach der von der jeweiligen Reibleiste abgewandten Seite von der Anlenkachse 37, 37' vorstehende Hebelarme 39, 39' auf, an denen einerseits die Reibleisten 36, 36' in ihre abseitigen Ausrücklagen beaufschlagende Federmittel 40, 40' und andererseits pneumatisch oder elektromagnetisch wirkende Betätigungsmittel 41, 41' zum Verschwenken der Reibleisten 36, 36' in ihre Antriebsstellungen angreifen.

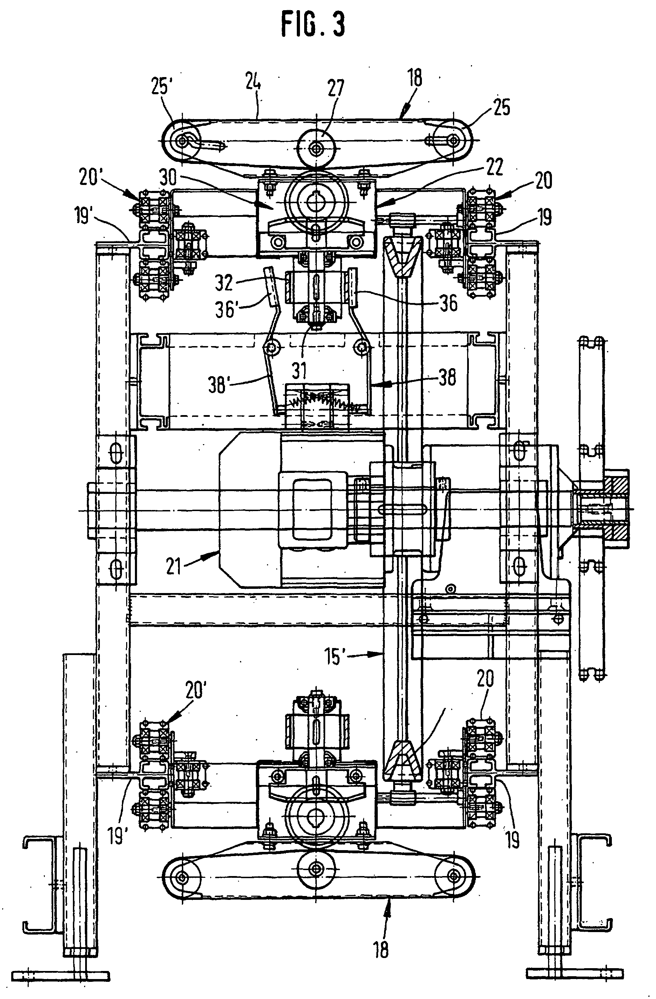

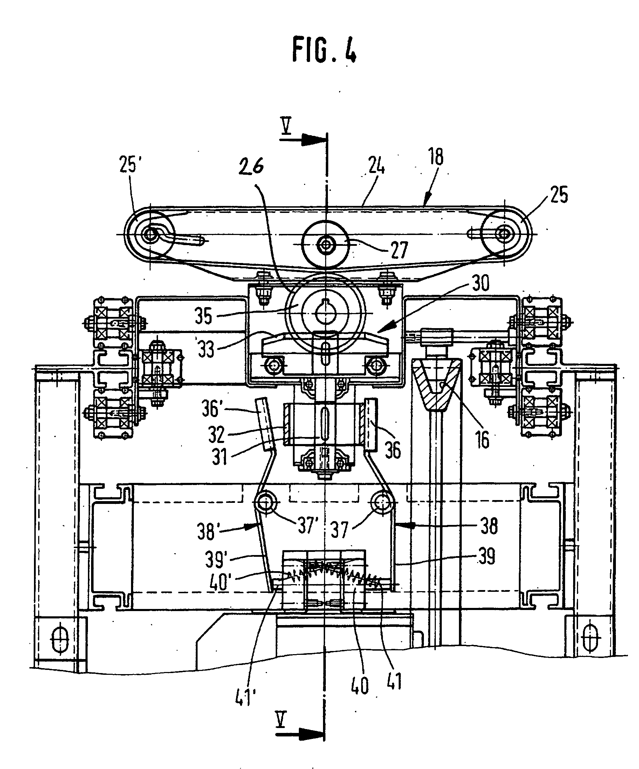

In der in den Fig. 3 und 4 gezeigten Betriebsstellung befindet sich die in der Zeichnung rechte Reibleiste 36 in Anlage an dem auf der Antriebswelle 31 des Kegelradgetriebes 30 aufgenommenen Reibrad 32, steht mithin also in ihrer Antriebsstellung. Wenn eine Sortiereinrichtung 18 mittels des Keilriemens 16 der Fördereinrichtung 14 im Bereich der betreffenden Abwurfstation 12 längs der Sortierstrecke bewegt wird, wirken das Reibrad 32 und die an diesem anliegende Reibleiste 36 reibungsschlüssig zusammen und die dadurch erzeugte Drehbewegung der Antriebswelle 31 des Kegelradgetriebes 30 wird über letzteres und die am Untergurt des Gurtbandes 24 dieser Sortiereinrichtung 18 angreifenden Reibrollen 26, 26' auf das Gurtband 24 übertragen mit der Folge, daß das Gurtband 24 in der entsprechenden Richtung umläuft. Ein gegensinniger Gurtbandantrieb liegt vor, wenn die in den Fig. 3 und 4 an dem auf der Antriebswelle 31 des Kegelradgetriebes 30 aufgenommenen Reibrad 32 anliegende Reibleiste 36 in ihre Ausrücklage betätigt und die in der Zeichnung linke Reibleiste 36' zur Zusammenwirkung mit dem genannten Reibrad 32 gebracht wird.

Bei bestimmungsgemäßem Einsatz der Vorrichtung 10 werden in einer Aufgabestation 42 mittels am Anfang der Sortierstrecke 11 schräg in diese einmündender Zuführvorrichtungen 43, 43' Stückgüter 44 zugeführt, wie die Pfeile 45 andeuten, und jeweils ein Stückgut 44 auf eine der mittels der Fördereinrichtung 14 in Richtung des Pfeils 46 (in Fig. 2) längs der Sortierstrecke 11 bewegten Sortiereinrichtungen 18 aufgegeben. Die Stückgüter 44 sind mit einer Codierung versehen, die beim Aufgeben eines Stückgutes 44 auf eine bestimmte Sortiereinrichtung 18 erfaßt wird. In Abhängigkeit von dieser Codierung wird mittels einer hier im einzelnen nicht interessierenden Steuereinrichtung die Reibleiste 36, 36' derjenigen Abwurfstation 12 in ihre Antriebsstellung betätigt, in der das betreffende Stückgut abgeworfen werden soll. Angesichts der paarweisen Anordnung der Reibleisten 36, 36' in jeder Abwurfstation 12 und der wahlweisen Betätigung jeweils einer Reibleiste in ihre Antriebsstellung gelingt wahlweise ein rechts- oder linksseitiger Abwurf der Stückgüter in eine der beidseitig von der Sortierstrecke angeordneten Abwurfrutschen 13, 13'.

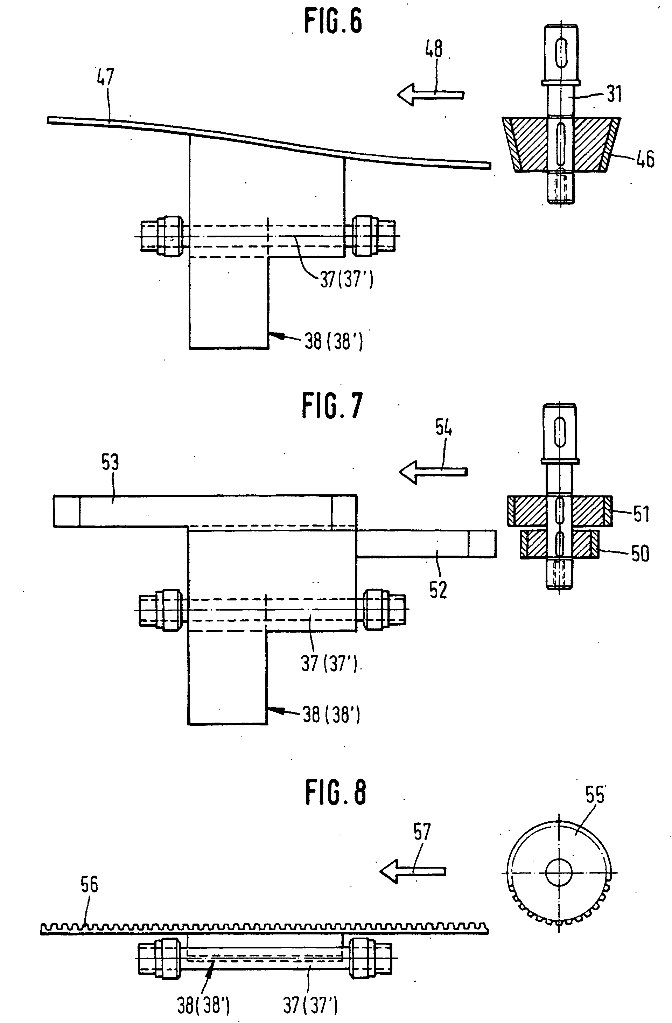

Die Mittel zum wahlweisen Antreiben der Gurtbänder 24 der Sortiereinrichtungen 18 können auch gemäß Fig. 6 ein konisch ausgebildetes Reibrad 46 und bogenförmig verlaufende Reibleisten 47 umfassen. Das Reibrad 46 ist auf der jeweils vom Winkelgetriebe 30 einer Sortiereinrichtung 18 vorstehenden Antriebswelle 31 drehfest aufgenommen und die Reibleisten 47 sind in gleicher Weise wie die Reibleisten 36, 36' an um Anlenkachsen 37, 37' verschwenkbaren Doppellenkern 38, 38' angeordnet.

Wenn eine mit einem konischen Reibrad 46 ausgerüstete Sortiereinrichtung 18 eine mit bogenförmig ausgebildeten Reibleisten 47 ausgestattete Abwurfstation in Richtung des Pfeils 48 durchläuft und eine der Reibleisten 47 in ihre Antriebsstellung verschwenkt ist, greift im Einlaufbereich die Reibleiste 47 zunächst an einem kleinen Durchmesser des Reibrades 46 und mit fortschreitendem Durchlauf an größeren Reibleistendurchmessern an. Demgemäß erfährt der Kurvengurt 24 der betreffenden Sortiereinrichtung 18.einen sich beim Durchlauf der Sortiereinrichtung durch die Abwurfstation beschleunigenden Antrieb.

Anstelle eines konischen Reibrades 46 können die Winkelgetriebe der Sortiereinrichtungen 18 auch mit zwei axial beabstandeten Reibrädern 50, 51 ausgerüstet sein, die drehfest auf der nach unten vorstehenden Antriebswelle 31 eines Winkelgetriebes der Sortiereinrichtungen 18 angeordnet sind. Die mit diesen Reibrädern 50, 51 zur Zusammenwirkung bringbaren Reibleisten umfassen jeweils einen ersten Reibleistenabschnitt 52 und einen zweiten Reibleistenabschnitt 53. Die Reibleistenabschnitte 52, 53 sind wiederum an um Anlenkachsen 37, 37' verschwenkbaren Doppellenkern 38, 38' angeordnet. Dabei steht der Reibleistenabschnitt 52 entgegen der durch den Pfeil 54 markierten Durchlaufrichtung der Sortiereinrichtungen 18 von dem Doppellenker 38, 38' vor und der Reibleistenabschnitt 53 ist in Durchlaufrichtung versetzt angeordnet und steht in Durchlaufrichtung von dem Doppellenker 38, 38' vor.

Wenn eine mit verschiedene Durchmesser aufweisenden Reibrädern ausgestattete Sortiereinrichtung in eine Abwurfstation einläuft, deren Reibleistenabschnitte 52, 53 in ihre Antriebsstellungen verschwenkt sind, gelangt zunächst das Reibrad 50 mit dem Reibleistenabschnitt 52 zur Zusammenwirkung und nachfolgend das Reibrad 51 mit dem Reibleistenabschnitt 53. Demgemäß erfolgt der Antrieb des Gurtbandes 24 der betreffenden Sortiereinrichtung 18 zunächst über das kleineren Durchmesser aufweisende Reibrad 50 und anschließend über das Reibrad 51, wenn dieses zur reibungsschlüssigen Zusammenwirkung mit dem Reibleistnabschnitt 53 gelangt und die Zusammenwirkung des Reibrades 50 mit dem Reibleistenabschnitt 52 beendet ist. Das Gurtband 24 der Sortiereinrichtung wird somit beim Durchlauf der Sortiereinrichtung mit zwei unterschiedlichen Geschwindigkeiten angetrieben, und zwar im Einlaufbereich zunächst mit einer geringen und anschließend einer erhöhten Geschwindigkeit.

Anstelle eines reibungsschlüssigen Antriebs können die Gurtbänder 24 der Sortiereinrichtungen auch mittels formschlüssig zur Zusammenwirkung bringbarer Antriebsmittel beim Durchlaufen der Abwurfstationen angetrieben werden. In Fig. 8 ist in einer Draufsicht ein Zahnritzel 55 dargestellt, das drehfest auf einer Antriebswelle 31 eines Winkelgetriebes der Sortiereinrichtungen 18 aufgenommen ist. Dieses Zahnritzel ist wahlweise beim Durchlaufen der Abwurfstationen mit Zahnstangen 56 zur Zusammenwirkung bringbar, die in gleicher Weise wie die Reibleisten bei den vorstehend erläuterten Ausführungsformen an Doppellenkern 38, 38' angeordnet und um Anlenkachsen 37, 37' in ihre Antriebsstellungen verschwenkbar sind.

Wenn eine Zahnstange 56 in einer Abwurfstation in ihre Antriebstellung verschwenkt ist und eine mit einem Zahnritzel 55 ausgerüstete Sortiereinrichtung 18 in Richtung des Pfeils 57 diese Abwurfstation durchläuft, greift die Verzahnung des Zahnritzels 55 in die Verzahnung der Zahnstange 56 ein und treibt dadurch das Gurtband 24 der Sortiereinrichtung 18 an. Formschlüssig zur Zusammenwirkung bringbare Mittel zum Antreiben der Gurtbänder haben sich insbesondere bei Vorrichtungen zum Sortieren schwergewichtiger Stückgüter und mäßigen Laufgeschwindigkeiten der Gurtbänder bewährt.

## Patentansprüche

1. Vorrichtung zum Sortieren von Stückgütern, bei der längs einer Sortierstrecke (11) aufeinanderfolgend Abwurfstationen (12) angeordnet sind und eine Fördereinrichtung (14) geführt und angetrieben sowie mit aufeinanderfolgenden Sortiereinrichtungen (18) ausgerüstet ist, und bei der jede Sortiereinrichtung (18) ein quer zur Sortierstrecke (11) antreibbares Gurtband (24) für die Aufnahme jeweils eines in einer Aufgabestation aufgebbaren Stückgutes und für dessen gezielten Abwurf in einer Abwurfstation (12) besitzt, wobei der wahlweise Antrieb der Gurtbänder (24) der Sortiereinrichtungen (18) in den Abwurfstationen (12) durch rein mechanische Antriebsmittel erfolgt und daß in den Abwurfstationen (12) jeweils erste Antriebsmittel angeordnet und beim Passieren einer Sortiereinrichtung (18) mit den dieser zugeordneten zweiten Antriebsmitteln zum Übertragen einer Drehbewegung auf deren Gurtband (24) wahlweise zur reibschlüssigen Zusammenwirkung bringbar sind, und wobei die zweiten Antriebsmittel der Sortiereinrichtungen (18) jeweils wenigstens ein mit dem Gurtband (24) der betreffenden Sortiereinrichtung (18) in Antriebsverbindung stehendes Reibrad (32, 46, 50, 51) umfassen und daß es sich bei den ersten Antriebsmitteln, die den Abwurfstationen (12) zugeordnet sind, um wahlweise mit den Reibrädern (32, 46, 50, 51) der Sortiereinrichtungen (18) zur reibschlüssigen Zusammenwirkung bringbare Reibleisten (36, 36' 47, 52, 53) handelt, die sich in Förderrichtung erstrecken, und wobei die zweiten Antriebsmittel der Sortiereinrichtungen (18) jeweils ein Winkelgetriebe (30) umfassen, das unter dem Gurtband (24) angeordnet ist und eine nach der vom Gurtband (24) der jeweiligen Sortiereinrichtung (18) wegweisenden Seite vorstehende Antriebswelle (31) besitzt, auf der das mit einer der in den Abwurfstationen (12) angeordneten Reibleisten (36, 36', 47, 52, 53) wahlweise in reibungsschlüssigen Kontakt bringbare Reibrad (32, 46, 50, 51) drehfest aufgenommen ist, und wobei das Winkelgetriebe (30) mit einer auf einer Abtriebswelle aufgenommenen Reibrolle (26, 26') ausgerüstet ist,
**dadurch gekennzeichnet,**
**daß** der Antrieb des Gurtbandes (24) der jeweiligen Sortiereinrichtung (18) über wenigstens eine am Untergurt des Gurtbandes (24) im Angriffsbereich einer dieses innenseitig abstützenden Gegendruckrolle (27) angreifenden Reibrolle (26, 26') erfolgt.

2. Vorrichtung nach Anspruch 1, **dadurch gekennzeichnet, daß** es sich bei den zweiten Antriebsmitteln der Sortiereinrichtungen (18) um konisch ausgebildete Reibräder (46) handelt und daß die mit diesen Reibrädern wahlweise zur Zusammenwirkung bringbaren Reibleisten (47) - in Durchlaufrichtung der Sortiereinrichtungen (18) gesehen - derart bogenförmig ausgebildet sind, daß beim Einlaufen einer Sortiereinrichtung (18) in eine Abwurfstation (12) eine mit dem Reibrad (46) der Sortiereinrichtung (18) zur Zusammenwirkung gebrachte Reibleiste (47) zunächst im Bereich eines kleinen Reibraddurchmessers und dann fortschreitend an größer werdenden Reibraddurchmessern angreift.

3. Vorrichtung nach Anspruch 1, **dadurch gekennzeichnet, daß** jede Sortiereinrichtung (18) mit wenigstens zwei Reibrädern (50, 51) unterschiedlicher Durchmesser ausgerüstet ist und daß als erste Antriebsmittel den Abwurfstationen (12) jeweils zwei derart abgestuft zueinander ausgebildete Reibleistenabschnitte (52, 53) zugeordnet sind, daß beim Einlaufen einer Sortiereinrichtung (18) in eine Abwurfstation (12) zunächst das Reibrad (50) mit kleinerem Durchmesser mit dem Reibleistenabschnitt (52) und danach das größeren Durchmesser aufweisende Reibrad (51) mit dem anderen Reibleistenabschnitt (53) zur Zusammenwirkung bringbar ist.

4. Vorrichtung zum Sortieren von Stückgütern, bei der längs einer Sortierstrecke (11) aufeinanderfolgend Abwurfstationen (12) angeordnet sind und eine Fördereinrichtung (14) geführt und angetrieben sowie mit aufeinanderfolgenden Sortiereinrichtungen (18) ausgerüstet ist, und bei der jede Sortiereinrichtung (18) ein quer zur Sortierstrecke (11) antreibbares Gurtband (24) für die Aufnahme jeweils eines in einer Aufgabestation aufgebbaren Stückgutes und für dessen gezielten Abwurf in einer Abwurfstation (12) besitzt, wobei der wahlweise Antrieb der Gurtbänder (24) der Sortiereinrichtungen (18) in den Abwurfstationen (12) durch rein mechanische Antriebsmittel erfolgt und daß im Bereich der Abwurfstationen (12) jeweils erste Antriebsmittel angeordnet und beim Passieren einer Sortiereinrichtung (18) mit den dieser zugeordneten zweiten Antriebsmitteln zum Übertragen einer Drehbewegung auf deren Gurtband (24) wahlweise zur Zusammenwirkung bringbar sind, und wobei es sich bei den zweiten Antriebsmitteln der Sortiereinrichtungen (18) um Zahnritzel (55) und bei den ersten Antriebsmitteln, die den Abwurfstationen (12) zugeordnet sind, um Zahnstangen (56) handelt, die mit den Zahnritzeln (55) der Sortiereinrichtungen (18) zur formschlüssigen Zusammenwirkung bringbar sind, wenn eine Sortiereinrichtung (18) eine Abwurfstation (12) durchläuft, und wobei die zweiten Antriebsmittel der Sortiereinrichtungen (18) jeweils ein Winkelgetriebe (30) umfassen, das unter dem Gurtband (24) angeordnet ist und eine nach der vom Gurtband (24) der jeweiligen Sortiereinrichtung (18) wegweisenden Seite vorstehende Antriebswelle (31) besitzt, auf der das mit einer der in den Abwurfstationen (12) angeordneten Zahnstangen (56) wahlweise in formschlüssigen Kontakt bringbare Zahnritzel (55) drehfest aufgenommen ist, und wobei das Winkelgetriebe (30) mit einer auf einer Abtriebswelle aufgenommenen Reibrolle (26, 26') ausgerüstet ist,
**dadurch gekennzeichnet,**
**daß** der Antrieb des Gurtbandes (24) der jeweiligen Sortiereinrichtung (18) über wenigstens eine am Untergurt des Gurtbandes (24) im Angriffsbereich einer dieses innenseitig abstützenden Gegendruckrolle (27) angreifenden Reibrolle (26, 26') erfolgt.

5. Vorrichtung nach einem der Ansprüche 1 bis 4, **dadurch gekennzeichnet, daß** die den Abwurfstationen (12) zugeordneten Reibleisten (36, 36', 47, 52, 53) oder Zahnstangen (56) quer zur Längserstreckung der Sortierstrecke (11) jeweils zwischen einer beim Passieren einer Sortiereinrichtung (18) mit deren Reibrad (32, 46, 52, 53) reibungsschlüssig oder Zahnritzel (55) formschlüssig zusammenwirkenden Antriebsstellung und einer abseitigen Ausrücklage betätigbar sind.

6. Vorrichtung nach Anspruch 5, **dadurch gekennzeichnet,, daß** die Reibleisten (36, 36', 47, 52, 53) oder Zahnstangen (56) an um vorrichtungsfeste Anlenkachsen (37, 37') verschwenkbaren Lenkern (38, 38') angeordnet und mittels der Lenker (38, 38') zwischen ihren Antriebsstellungen und Ausrücklagen betätigbar sind.

7. Vorrichtung nach Anspruch 6, **dadurch gekennzeichnet, daß** es sich bei den Lenkern (38, 38'), an denen die Reibleisten (36, 36', 47, 52, 53) oder Zahnstangen (56) angeordnet sind, um Doppellenker mit jeweils einem nach der von der Reibleiste oder Zahnstange abgewandten Seite von der jeweiligen Anlenkachse (37, 37') vorstehenden Hebelarm (39, 39') handelt und daß an den vorstehenden Hebelarmen Mittel (40, 40'; 41, 41') zum Betätigen der Reibleisten (36, 36', 47, 52, 53) oder Zahnstangen (56) zwischen ihren Antriebsstellungen und Ausrücklagen angreifen.

8. Vorrichtung nach einem der Ansprüche 1 bis 7, **dadurch gekennzeichnet, daß** jeder Abwurfstation (12) paarweise zwei quer zur Förderrichtung voneinander beabstandete Reibleisten (36, 36', 47, 52, 53) oder Zahnstangen (56) zugeordnet sind, die beim Passieren einer Sortiereinrichtung (18) wahlweise rechts- oder linksseitig angreifend mit deren Reibrad (32, 46 50, 51) oder Zahnritzel (55) zur Zusammenwirkung bringbar sind.

9. Vorrichtung nach einem der Ansprüche 1 bis 8, **dadurch gekennzeichnet, daß** die Reibleisten (36, 36', 47, 52, 53) oder Zahnstangen (56) als erste Antriebsmittel elektromagnetisch oder pneumatisch aus ihren jeweiligen Ausrücklagen in ihre Antriebsstellungen betätigbar sind.

10. Vorrichtung nach Anspruch 9, **dadurch gekennzeichnet, daß** die Betätigung der Reibleisten (36, 36', 47, 52, 53) oder Zahnstangen (56) in ihre jeweiligen Antriebsstellungen gegen die Wirkung rückstellender Federkräfte erfolgt.

11. Vorrichtung nach einem der Ansprüche 1 bis 10, **dadurch gekennzeichnet, daß** die Reibleisten (36, 36', 47, 52, 53) oder Zahnstangen (56) mittels doppelt wirkender Arbeitszylinder aus ihren jeweiligen Ausrücklagen in ihre Antriebsstellungen und umgekehrt betätigbar sind.

12. Vorrichtung nach einem der Ansprüche 1 bis 11, **dadurch gekennzeichnet, daß** die Fördereinrichtung (14) einen über Umlenkrollen (15, 15') geführten Umschlingungstrieb (16) umfaßt, an den die Sortiereinrichtungen (18) in Förderrichtung aufeinanderfolgend angekoppelt sind.

13. Vorrichtung nach Anspruch 12, **dadurch gekennzeichnet, daß** der Umschlingungstrieb (16) über in Vertikalebenen umlaufende Umlenkrollen (15, 15') geführt ist.

14. Vorrichtung nach Anspruch 11 oder 12, **dadurch gekennzeichnet, daß** es sich bei dem Umschlingungstrieb der Fördereinrichtung (14) um einen Keilriemen (16) handelt.

15. Vorrichtung nach einem der Ansprüche 1 bis 14, **dadurch gekennzeichnet, daß** wenigstens eine Zuführeinrichtung (43, 43') zum Aufgeben von Stückgütern (44) auf die Sortiereinrichtungen (18) am Anfang der Sortierstrecke (11) unter Bildung einer Aufgabestation angeordnet ist.

16. Vorrichtung nach Anspruch 15, **dadurch gekennzeichnet, daß** die Zuführeinrichtung (43, 43') unter Einschluß eines spitzen Winkels gegenüber der Förderrichtung in die Sortierstrecke (11) einmündet.

## Claims

1. Device for sorting articles, in which successive discharge stations (12) are arranged, and a conveyor (14) is guided and driven, along a sorting path (11), the conveyor being equipped with successive sorting devices (18), and in which each sorting device (18) comprises a belt (24), which is drivable transversely to the sorting path (11), each for reception of a respective article loadable in a loading station and for the targeted discharge thereof in a discharge station (12), wherein the selectable drive of the belts (24) of the sorting devices (18) in the discharge stations (12) is carried out by purely mechanical drive means and that respective first drive means are arranged in the discharge stations (12) and on passing through of a sorting device (18) can be selectably brought into frictional co-operation with the second drive means, which is associated therewith, for the transmission of a rotational movement to the belt (24) thereof, wherein the second drive means of the sorting devices (18) each comprise at least one friction wheel (32, 46, 50, 51) disposed in drive connection with the belt (24) of the relevant sorting device (18) and that the first drive means, which are associated with the discharge stations (12), are friction strips (36, 36' 47, 52, 53) which can be selectably brought into frictional co-operation with the friction wheels (32, 46, 50, 51) of the sorting devices (18) and which extend in conveying direction, wherein the second drive means of the sorting devices (18) each comprise an angle transmission (30) which is arranged below the belt (24) and has a drive shaft (31), which projects towards the side facing away from the belt (24) of the respective sorting device (18) and on which the friction wheel (32, 46, 50, 51) able to be selectably brought into friction-locking contact with one of the friction strips (36, 36', 47, 52, 53) arranged in the discharge stations (12) is mounted to be secure against relative rotation, and wherein the angle drive (30) is equipped with a friction roller (26, 26') received on a driven shaft, **characterised in that** the drive of the belt (24) of the respective sorting device (18) takes place by way of at least one friction roller (26, 26') engaging the lower run of the belt (24) in the region of action of a counter-pressure roller (27) supporting this at the inner side.

2. Device according to claim 1, **characterised in that** the second drive means of the sorting devices (18) are conically formed friction wheels (46) and that the friction strips (47) able to be selectably brought into co-operation with these friction wheels are formed - seen in the direction of running through of the sorting devices (18) - to be curved in such a manner that on entry of a sorting device (18) into a discharge station (12) a friction strip (47) brought into co-operation with the friction wheel (46) of the sorting device (18) initially engages in the region of a small friction wheel diameter and then progressively at friction wheel diameters becoming greater.

3. Device according to claim 1, **characterised in that** each sorting device (18) is equipped with at least two friction wheels (50, 51) of different diameter and that as first drive means there are associated with each of the discharge stations (12) two respective friction strip sections (52, 53) which are formed to be stepped relative to one another in such a manner that on entry of a sorting device (18) into a discharge station (12) initially the friction wheel (50) with smaller diameter can be brought into co-operation with the friction strip section (52) and thereafter the friction wheel (51) having the greater diameter can be brought into co-operation with the other friction strip section (53).

4. Device for sorting articles, in which successive discharge stations (12) are arranged, and a conveyor (14) is guided and driven, along a sorting path (11), the conveyor being equipped with successive sorting devices (18), and in which each sorting device (18) comprises a belt (24), which is drivable transversely to the sorting path (11), each for reception of a respective article loadable in a loading station and for the targeted discharge thereof in a discharge station (12), wherein the selectable drive of the belts (24) of the sorting devices (18) in the discharge stations (12) is carried out by purely mechanical drive means and that respective first drive means are arranged in the region of the discharge stations (12) and on passing through of a sorting device (18) can be selectably brought into frictional co-operation with the second drive means, which is associated therewith, for the transmission of a rotational movement to the belt (24) thereof, wherein the second drive means of the sorting devices (18) comprise pinions (55) and the first drive means, which are associated with the discharge stations (12), comprises racks (56) which can be brought into shape-locking co-operation with the pinions (55) of the sorting devices (18) when a sorting device (18) runs through a discharge station (12), wherein the second drive means of the sorting devices (18) each comprise an angle transmission (30) which is arranged below the belt (24) and has a drive shaft (31), which projects towards the side facing away from the belt (24) of the respective sorting device (18) and on which the pinion (55) able to be selectably brought into shape-locking contact with one of the racks (56) arranged in the discharge stations (12) is mounted to be secure against relative rotation, and wherein the angle transmission (30) is equipped with a friction roller (26, 26') mounted on a drive shaft, **characterised in that** the drive of the belt (24) of the respective sorting device (18) takes place by way of at least one friction roller (26, 26') engaging the lower run of the belt (24) in the region of action of a counter-pressure roller (27) supporting this at the inner side.

5. Device according to one of claims 1 to 4, **characterised in that** the friction strips (36, 36', 47, 52, 53) or racks (56) associated with the discharge stations (12) are actuable transversely to the longitudinal direction of the sorting path (11) each time between a drive setting, which co-operates, on passing through of a sorting device (18), in friction-locking manner with the friction wheel (32, 46, 52, 53) thereof or in shape-locking manner with the pinion (55) thereof and a remote disengaged position.

6. Device according to claim 5, **characterised in that** the friction strips (36, 36', 47, 52, 53) or racks (56) are arranged at articulation axles (37, 37'), which are fixed relative to the device, of pivotable swing arms (38, 38') and are actuable by means of the swing arms (38, 38') between their drive settings and disengaged positions.

7. Device according to claim 6, **characterised in that** the swing arms (38, 38'), at which the friction strips (36, 36', 47, 52, 53) or racks (56) are arranged, are double swing arms each with a respective lever arm (39, 39') projecting towards the side, which is remote from the friction strip or rack, of the respective articulation axle (37, 37') and that means (40, 40'; 41') for actuating the friction strips (36, 36', 47, 52, 53) or racks (56) between their drive settings and disengaged positions engage at the projecting lever arms.

8. Device according to one of claims 1 to 7, **characterised in that** two friction strips (36, 36', 47, 52, 53) or racks (56) spaced apart from one another transversely to the conveying direction are associated in pairs with each discharge station (12) and on passing through of a sorting device (18) can be brought into co-operation with the friction wheel (32, 46, 50, 51) or pinion (55) thereof to selectably engage at the righthand or lefthand side.

9. Device according to one of claims 1 to 8, **characterised in that** the friction strips (36, 36', 47, 52, 53) or racks (56) as first drive means are electromagnetically or pneumatically actuable out of the respective disengaged positions thereof into the drive settings thereof.

10. Device according to claim 9, **characterised in that** the actuation of the friction strips (36, 36', 47, 52, 53) or racks (56) into the respective drive settings thereof takes place against the action of restoring spring forces.

11. Device according to one of claims 1 to 10, **characterised in that** the friction strips (36, 36', 47, 52, 53) or racks (56) are actuable by means of double-acting working cylinders from the respective disengaged positions thereof into the drive settings thereof and conversely.

12. Device according to one of claims 1 to 11, **characterised in that** the conveyor (14) comprises a loop drive (16) which is guided around deflecting rollers (15, 15') and to which the sorting devices (18) are coupled in succession in conveying direction.

13. Device according to claim 12, **characterised in that** the loop drive (16) guided over deflecting rollers (15, 15') circulating in vertical planes.

14. Device according to claim 11 or 12, **characterised in that** the loop drive of the conveyor (14) comprises a V-belt (16).

15. Device according to one of claims 1 to 14, **characterised in that** at least one feed device (43, 43') for loading articles (44) onto the sorting devices (18) is arranged at the start of the sorting path (11) with formation of a loading station.

16. Device according to claim 15, **characterised in that** the feed device (43, 43') opens into the sorting path (11) with inclusion of an acute angle relative to the conveying direction.

## Revendications

1. Dispositif de tri d'articles, où sont disposées le long d'un chemin de triage (11) des postes d'éjection successifs (12) et une installation de convoyage (14) est guidée et entraînée et est équipée d'installations de triage successives (18), et où chaque installation de triage (18) possède une courroie (24) pouvant être entraînée transversalement au chemin de triage (11) pour la réception respectivement d'un article chargé dans un poste de chargement et pour l'éjection ciblée dans un poste d'éjection (12), où l'entraînement sélectif des courroies (24) des installations de triage (18) dans les postes d'éjection (12) a lieu par des moyens d'entraînement purement mécaniques, et en ce que sont disposés dans les postes d'éjection (12) respectivement des premiers moyens d'entraînement et peuvent être amenés lors du passage d'une installation de triage (18) avec des deuxièmes moyens d'entraînement associés à celle-ci pour transférer un mouvement de rotation sur la courroie de celle-ci (24) sélectivement en vue d'une coopération par friction, et où les deuxièmes moyens d'entraînement des installations de triage (18) comprennent respectivement au moins une roue de friction (32, 46, 50, 51) en liaison d'entraînement avec la courroie (24) de l'installation de triage correspondante (18) et en ce que, dans le cas des premiers moyens d'entraînement qui sont associés aux postes d'éjection (12), il s'agit de baguettes de friction (36, 36', 47, 52, 53) pouvant être amenées sélectivement avec les roues de friction (32, 46, 50, 51) des installations de triage (18) en coopération par friction, qui s'étendent dans la direction de convoyage, et où les deuxièmes moyens d'entraînement des installations de triage (18) comportent chacun un engrenage angulaire (30) qui est disposé sous la courroie (24) et qui possède un arbre d'entraînement (31) faisant saillie vers le côté orienté au loin de la courroie (24) de l'installation de triage respective (18), sur lequel est reçu d'une manière solidaire en rotation la roue de friction (32, 46, 50, 51) pouvant être amenée en contact avec l'une des baguettes de friction (36, 36', 47, 52, 53) disposées dans les postes d'éjection (12) sélectivement en contact par friction, et où l'engrenage angulaire (30) est équipé d'un rouleau de friction (26, 26') reçu sur un arbre mené, **caractérisé en ce que** l'entraînement de la courroie (24) de l'installation de triage respective (18) a lieu par au moins un rouleau de friction (26, 26') s'appliquant au brin inférieur de la courroie (24) dans la zone d'attaque d'un rouleau de contre-pression (27) supportant celle-ci au côté intérieur.

2. Dispositif selon la revendication 1, **caractérisé en ce que** dans le cas des deuxième moyens d'entraînement des installations de triage (18), il s'agit de roues de friction (46) réalisées en une forme conique, et **en ce que** les baguettes de friction (47) pouvant être amenées à coopérer sélectivement avec ces roues de friction, en regardant dans la direction de passage des installations de triage (18) sont réalisées en forme d'arc de telle sorte que lors de l'arrivée d'une installation de triage (18) dans un poste d'éjection (12), une baguette de friction (47) amenée à coopérer avec la roue de friction (46) de l'installation de triage (18) s'applique d'abord au voisinage d'un petit diamètre de roue de friction et ensuite progressivement à des diamètres de roue de friction devenant de plus en plus grands.

3. Dispositif selon la revendication 1, **caractérisé en ce que** chaque installation de triage (18) est équipée d'au moins deux roues de friction (50, 51) d'un diamètre différent et **en ce que** sont associés aux postes d'éjection (12), comme premiers moyens d'entraînement, respectivement deux tronçons de baguette de friction (52, 53) étagés l'un relativement à l'autre de façon que lors de l'arrivée d'une installation de triage (18) dans un poste d'éjection (12), tout d'abord la roue de friction (50) d'un plus petit diamètre peut être amenée à coopérer avec le tronçon de baguette de friction (52) et ensuite la roue de friction (51) présentant le plus grand diamètre avec l'autre tronçon de baguette de friction (53).

4. Dispositif de tri d'articles, où sont disposés le long d'un chemin de triage (11) des postes d'éjection successifs (12) et une installation de convoyage (14) est guidée et entraînée et équipée d'installations de triage successives (18), et où chaque installation de triage (18) possède une courroie (24) pouvant être entraînée transversalement au chemin de triage (11) pour la réception respectivement d'un article pouvant être chargé dans le poste de chargement et pour l'éjection ciblée de celui-ci dans un poste d'éjection (12) où l'entraînement sélectif des courroies (24) des installations de triage (18) dans les postes d'éjection (12) a lieu par des moyens d'entraînement purement mécaniques, et en ce que sont disposés au voisinage des postes d'éjection (12) respectivement de premiers moyens d'entraînement et, lors du passage d'une installation de triage (18), peuvent être amenés à coopérer sélectivement avec des deuxièmes moyens d'entraînement associés à celle-ci pour la transmission d'un mouvement de rotation à la courroie (24) de celle-ci, et où dans le cas des deuxièmes moyens d'entraînement des installations de triage (18), il s'agit de pignons (55) et dans le cas des premiers moyens d'entraînement qui sont associés aux postes d'éjection (12), de crémaillères (56) qui peuvent être amenées avec les pignons (55) des installations de triage (18) en une coopération par concordance des formes lorsqu'une installation de triage (18) passe à travers un poste d'éjection (12), et où les deuxièmes moyens d'entraînement des installations de triage (18) comprennent respectivement un engrenage angulaire (30) qui est disposé sous la courroie (24) et possède un arbre menant (31) faisant saillie vers le côté orienté au loin de la courroie (24) de l'installation de triage respective (18) sur lequel est reçu d'une manière solidaire en rotation le pignon (55) pouvant être sélectivement amené en contact par concordance des formes avec l'une des crémaillères (56) disposées dans les postes d'éjection (12) et où l'engrenage angulaire (30) est équipé d'un rouleau de friction (26, 26') reçu sur un arbre mené, **caractérisé en ce que** l'entraînement de la courroie (24) de l'installation de triage respective (18) a lieu par au moins un rouleau de friction (26, 26') s'appliquant au brin inférieur de la courroie (24) dans la zone d'attaque d'un rouleau de contre-pression (27) supportant celle-ci au côté intérieur.

5. Dispositif selon l'une des revendications 1 à 4, **caractérisé en ce que** les baguettes de friction (36, 36', 47, 52, 53) ou crémaillères (56) associées aux postes d'éjection (12) sont actionnables transversalement à l'extension longitudinale du chemin de triage (11) respectivement entre une position d'entraînement coopérant lors du passage d'une installation de triage (18) avec la roue de friction de celle-ci (32, 46, 52, 53) par friction ou le pignon (55) par concordance des formes, et une position désengagée vers le côté.

6. Dispositif selon la revendication 5, **caractérisé en ce que** les baguettes de friction (36, 36', 47, 52, 53) ou crémaillères (56) sont disposées autour de bielles (38, 38') aptes à pivoter autour d'axes d'articulation (37, 37') solidaires du dispositif et sont actionnables par les bielles (38, 38') entre leurs positions d'entraînement et positions désengagées.

7. Dispositif selon la revendication 6, **caractérisé en ce que** dans le cas des bielles (38, 38') auxquelles sont disposées les baguettes de friction (36, 36', 47, 52, 53) ou crémaillères (56), il s'agit de bielles doubles avec respectivement un bras de levier (39, 39') faisant saillie de l'axe d'articulation respectif (37, 37') vers le côté orienté au loin de la baguette de friction ou crémaillère, et **en ce que** des moyens (40, 40', 41, 41') s'appliquent aux bras de levier précités pour actionner les baguettes de friction (36, 36', 47, 52, 53) ou les crémaillères (56) entre leurs positions d'entraînement et positions désengagées.

8. Dispositif selon l'une des revendications 1 à 7, **caractérisé en ce que** sont associées à chaque poste d'éjection (12) par paires, deux baguettes de friction (36, 36', 47, 52, 53) ou crémaillères (56) espacées l'une de l'autre transversalement à la direction de convoyage qui, lors du passage d'une installation de triage (18) peuvent être sélectivement amenées en coopération, en s'appliquant au côté droit ou au côté gauche, avec la roue de friction (32, 46, 50, 51) ou le pignon (55) de celle-ci.

9. Dispositif selon l'une des revendications 1 à 8, **caractérisé en ce que** les baguettes de friction (36, 36', 47, 52, 53) ou crémaillères (56) sont actionnables, en tant que premiers moyens d'entraînement, d'une manière électromagnétique ou pneumatique de leurs positions désengagées respectives dans leurs positions d'entraînement.

10. Dispositif selon la revendication 9, **caractérisé en ce que** l'actionnement des baguettes de friction (36, 36', 47, 52, 53) ou des crémaillères (56) dans leurs positions d'entraînement respectives a lieu contre l'action des forces de ressort de rappel.

11. Dispositif selon l'une des revendications 1 à 10, **caractérisé en ce que** les baguettes de friction (36, 36', 47, 52, 53) ou crémaillères (56) sont actionnables au moyen de vérins de travail à effet double de leurs positions désengagées respectives dans leurs positions d'entraînement et inversement.

12. Dispositif selon l'une des revendications 1 à 11, **caractérisé en ce que** l'installation de convoyage (14) comprend une commande d'enroulement (16) guidée sur des rouleaux de renvoi (15, 15') à laquelle sont couplées les installations de triage (18) en se suivant dans la direction de convoyage.

13. Dispositif selon la revendication 12, **caractérisé en ce que** la commande d'enroulement (16) est guidée sur des rouleaux de renvoi (15, 15') tournant dans des plans verticaux.

14. Dispositif selon la revendication 11 ou 12, **caractérisé en ce que** dans le cas de la commande d'enroulement de l'installation de convoyage (14), il s'agit d'une courroie trapézoïdale (16).

15. Dispositif selon l'une des revendications 1 à 14, **caractérisé en ce qu'**au moins une installation d'amenée (43, 43') pour charger des articles (44) sur les installations de triage (18) est disposée au début du chemin de triage (11) en formant un poste de chargement.

16. Dispositif selon la revendication 15, **caractérisé en ce que** l'installation d'amenée (43, 43') débouche dans le chemin de triage (11) en formant un angle aigu relativement à la direction de convoyage.
